# FASCICULE DE BREVET EUROPEEN

(11) **EP 4 107 307 B1**
(45) Date de publication et mention de la délivrance du brevet: **13.12.2023**
(21) Numéro de dépôt: 21716497.9
(22) Date de dépôt: 15.03.2021
(51) Int. Cl.: C23G 1/00, B22C 9/04, B22C 9/10, C23G 1/08, F01D 5/00, F01D 25/00, C23F 1/26, C23F 1/28, B22D 29/00, F01D 5/18

(54) **PROCÉDÉ DE DÉCAPAGE CHIMIQUE D'UNE PIÈCE MÉTALLIQUE DE FONDERIE À NOYAU(X) CÉRAMIQUE(S) POREUX**
VERFAHREN ZUM CHEMISCHEN BEIZEN EINES METALLGUSSTEILS MIT PORÖSEM KERAMIKKERN/PORÖSEN KERAMIKKERN(EN)
METHOD FOR CHEMICAL PICKLING OF A CAST METAL PART WITH POROUS CERAMIC CORE(S)

(30) Priorité: 18.03.2020 FR 2002672
(43) Date de publication de la demande: 28.12.2022
(73) Titulaire: SAFRAN AIRCRAFT ENGINES, 75015 Paris (FR)
(72) Inventeur: KREBS, Jean-Philippe, 77550 Moissy-Cramayel (FR); BRUIN, Aymeric, 77550 Moissy-Cramayel (FR)
(74) Mandataire: Brevalex
(86) Numéro de dépôt international: PCT/FR2021/050425
(87) Numéro de publication internationale: WO 2021/186124

(56) Documents cités:
- EP-A1- 1 637 253
- WO-A1-2019/202281
- FR-A1- 3 084 673

## Description

### Domaine technique

L'invention relève du domaine de la fabrication de pièces métalliques par fonderie à cire perdue.

Plus spécifiquement, elle se rapporte à un procédé de décapage chimique d'une pièce métallique de fonderie à noyau(x) céramique(s) poreux.

Elle se rapporte également à un procédé de fabrication d'une pièce métallique par fonderie à cire perdue, dans lequel est mis en oeuvre ce procédé de décapage chimique.

L'invention trouve, en particulier, application dans la fabrication d'aubes de turbines pour turbomachines, qui présentent des cavités internes à géométrie complexe, formant notamment des circuits de refroidissement, telles que celles dont sont munis les turboréacteurs d'aéronefs.

### État de la technique antérieure

Pour fabriquer des pièces métalliques telles que des aubes de turbines pour turbomachines, on utilise classiquement la technique de fonderie connue sous le nom de « fonderie à cire perdue ».

Schématiquement, la fabrication par fonderie à cire perdue d'aubes de turbine, qui sont constituées d'une structure métallique comprenant une ou plusieurs cavités séparées les unes des autres par des parois, passe tout d'abord par la réalisation de pièces en céramique, dites « noyaux céramiques », qui sont destinées à former les cavités des aubes.

Pour chacune des aubes que l'on désire fabriquer, un modèle en cire est réalisé, par exemple par injection sous pression d'une cire liquide dans un moule métallique ayant intérieurement la forme externe de l'aube et dans lequel ont été placés un ou plusieurs noyaux céramiques selon le nombre de cavités devant être présenté par l'aube.

Après démoulage du modèle en cire ainsi obtenu, ce dernier est recouvert d'une carapace, aussi appelée « moule-carapace », en un matériau réfractaire, typiquement une céramique, par des trempages successifs du modèle en cire dans des barbotines suivis d'un saupoudrage de sable appelé « stucco ».

Après solidification et séchage, le moule-carapace est soumis à une opération appelée « décirage » qui consiste à évacuer de ce moule le modèle en cire par fusion de cette cire.

Puis, le moule-carapace est soumis à un frittage, ce qui permet d'éliminer les traces de cire présentes à l'intérieur du moule-carapace et de consolider ce moule et de l'amener à la température de coulée du métal ou de l'alliage.

Après un contrôle de l'intégrité interne et externe du moule-carapace, un métal ou un alliage métallique en fusion est coulé dans le moule-carapace et vient occuper les espaces existant, suite au décirage, entre la paroi intérieure du moule-carapace et le ou les noyaux céramiques ainsi qu'entre les noyaux céramiques eux-mêmes si plusieurs noyaux sont présents.

Après solidification du métal ou de l'alliage, le moule-carapace est détruit, typiquement par vibrations ou par jet d'eau, puis le ou les noyaux céramiques sont éliminés, typiquement par dissolution dans une solution basique adaptée (KOH ou NaOH). Ces opérations sont appelées « décochages ».

Les décochages sont suivis de diverses opérations de finition, puis de contrôle pour vérifier que les aubes de turbines sont conformes.

Ainsi, dans le procédé de fonderie à cire perdue, la structure métallique des aubes est formée par les espaces dans lesquels le métal ou l'alliage a été coulé tandis que les cavités de l'aube sont formées par les espaces laissés vides par le décochage des noyaux céramiques.

Dans le cadre de la fabrication de certaines aubes, il est procédé, entre le décochage des moules-carapaces et le décochage des noyaux céramiques, à un décapage chimique de la surface externe de la structure métallique des aubes qui a été laissée à nu par le décochage des moules-carapaces.

Ce décapage, qui vise à supprimer les contraintes résiduelles superficielles, est typiquement réalisé par immersion des aubes dans un bain à base d'acide chlorhydrique.

Les noyaux céramiques étant en communication fluidique avec le bain acide et ayant une structure poreuse, ils se gorgent d'acide pendant le décapage chimique et le retiennent.

Compte-tenu du fait que le décochage des noyaux céramiques n'est pas forcément réalisé dans la foulée de ce décapage, la rétention d'acide par les noyaux céramiques peut se traduire par des manques de matière plus ou moins importants au niveau de la structure métallique des aubes, notamment au niveau de la surface interne de ce qui est communément appelé « baignoire » dans le domaine des aubes, ainsi qu'au niveau des parois séparant les cavités internes logées dans cette structure.

En-dessous d'une certaine profondeur, les manques de matière ne justifient pas que les aubes soient mises au rebus pour non-conformité aux spécifications de la définition mais ils peuvent nuire à la longévité des aubes, tandis qu'au-delà de cette profondeur, les aubes sont purement et simplement mises au rebus.

WO 2019/202281 A1 décrit un procédé de fabrication d'une pièce métallique par fonderie à cire perdue, dans lequel est mis en oeuvre un procédé de décapage chimique.

### Exposé de l'invention

L'invention vise justement à fournir une solution, à la fois simple et économique, à ce problème en proposant un procédé de décapage chimique d'une pièce métallique de fonderie, comprenant une enveloppe métallique qui délimite un espace interne dans lequel est logé au moins un noyau céramique poreux, et un espace externe, le noyau céramique étant en communication fluidique avec l'espace externe, lequel procédé comprend :
- un remplissage des pores du noyau céramique avec un liquide ; puis
- le décapage chimique de la pièce métallique de fonderie.

Ainsi, selon l'invention, on remplit les pores du ou des noyaux céramiques avec un liquide avant de procéder au décapage chimique de la pièce métallique de fonderie de sorte à empêcher ou, à tout le moins limiter, la pénétration dans ces pores du bain utilisé pour le décapage chimique.

Dans ce qui précède et ce qui suit, on entend par « enveloppe métallique », une enveloppe aussi bien constituée d'un alliage métallique que d'un métal.

Conformément à l'invention, le remplissage des pores du ou des noyaux céramiques est, de préférence, réalisé par immersion de la pièce métallique dans le liquide, de préférence à température ambiante.

Toutefois, il peut également être réalisé par injection du liquide dans la pièce métallique *via* la ou les ouvertures que comprend l'enveloppe métallique de la pièce métallique de fonderie.

De préférence, le remplissage des pores du ou des noyaux céramiques est réalisé jusqu'à ce que la masse de liquide présente dans ces pores représente au moins 90 %, de préférence 95 % et, idéalement, 100 % de la masse de liquide que contiendraient ces pores s'ils étaient saturés en liquide.

Le temps de remplissage nécessaire pour obtenir une telle masse de liquide dans les pores du ou des noyaux poreux peut aisément être déterminé, pour une pièce métallique de fonderie d'un type donné, par pesée de cette pièce métallique pendant ce remplissage - étant entendu qu'à saturation ou quasi saturation, le poids de la pièce métallique va rester constant ou quasi constant - et être ensuite appliqué à toutes les pièces métalliques de fonderie du même type.

Le choix du liquide n'est pas spécialement limité pour autant que sa viscosité lui permette de pénétrer facilement dans les pores du noyau céramique.

Toutefois, on préfère utiliser une solution aqueuse - laquelle peut, par exemple, être une solution diluée d'un alcali du type soude ou potasse si le décapage chimique est prévu pour être un décapage acide - et, mieux encore, de l'eau.

En fonction du métal ou de l'alliage dont est constituée l'enveloppe métallique de la pièce métallique de fonderie, le décapage chimique peut être :
- un décapage acide que l'on réalise, par exemple, par immersion de la pièce métallique de fonderie dans un bain comprenant un acide minéral ou un mélange d'acides minéraux du type acide chlorhydrique, acide sulfurique, acide fluorhydrique, acide nitrique, acide phosphorique, etc., ou par aspersion d'un tel bain sur la pièce métallique ; ou
- un décapage alcalin que l'on réalise, par exemple, par immersion de la pièce métallique de fonderie dans un bain comprenant un alcali du type soude ou potasse, ou par aspersion d'un tel bain sur la pièce métallique ; ou encore
- un décapage qui associe deux traitements successifs de la pièce métallique de fonderie, l'un par un bain comprenant un acide minéral ou un mélange d'acides minéraux et l'autre par un bain comprenant un alcali.

Dans tous les cas, le décapage peut être réalisé à chaud.

Conformément à l'invention, le décapage chimique est, de préférence, un décapage acide.

Plus spécifiquement, ce décapage comprend avantageusement une immersion de la pièce métallique de fonderie dans un bain comprenant de l'acide chlorhydrique.

Conformément à l'invention, la pièce métallique de fonderie est, de préférence, une aube de turbine pour turbomachine et, mieux encore, une aube de turbine pour turboréacteur d'aéronef.

L'invention a également pour objet un procédé de fabrication d'une pièce métallique par fonderie à cire perdue, comprenant :
- la fourniture d'une pièce métallique de fonderie, comprenant une enveloppe métallique qui délimite un espace interne dans lequel est logé au moins un noyau céramique poreux, et un espace externe, le noyau céramique poreux étant en communication fluidique avec l'espace externe ; et
- un décapage chimique de la pièce métallique de fonderie par la mise en oeuvre d'un procédé de décapage chimique tel que précédemment décrit.

Conformément à l'invention, la pièce métallique est, de préférence, une aube de turbine pour turbomachine et, mieux encore, une aube de turbine pour turboréacteur d'aéronef.

D'autres avantages et caractéristiques de l'invention apparaîtront à la lecture du complément de description, non limitatif, qui suit et qui se réfère aux figures annexées.

### Brève description des figures

La figure 1 illustre, vue en perspective, un exemple d'une aube de turbine pour turbomachine susceptible d'être fabriquée par fonderie à cire perdue.
La figure 2 illustre, vue de dessus, l'aube de turbine de la figure 1 telle que fabriquée par fonderie à cire perdue, après décochage du moule-carapace ayant servi à cette fabrication mais avant décochage du noyau céramique poreux ayant également servi à cette fabrication.
La figure 3 illustre l'évolution de la masse d'eau, notée M et exprimée en mg, absorbée par le noyau céramique poreux d'une aube de turbine du type de celle montrée sur la figure 2 en fonction du temps d'immersion, noté t et exprimé en secondes, de cette aube dans de l'eau.

### Exposé détaillé d'un mode de mise en oeuvre particulier

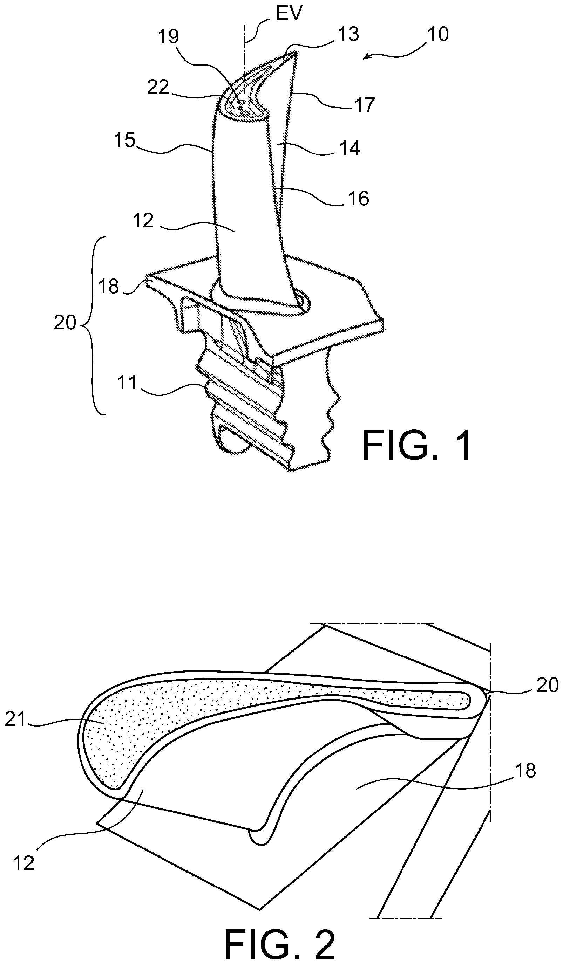

On se réfère tout d'abord à la figure 1 qui illustre un exemple d'une aube de turbine 10 pour turbomachine susceptible d'être fabriquée par un procédé de fonderie à cire perdue.

Une telle aube comprend une structure métallique 20 composée de trois éléments, à savoir :
- un pied 11 par lequel elle est destinée à être fixée à un disque de turbine (non représenté),
- une pale 12 délimitée par une coque 13 qui se vrille autour d'un axe EV dit « axe d'envergure » en formant une surface d'intrados 14 et une surface d'extrados 15 reliées en un bord d'attaque 16 et un bord de fuite 17, et
- une région intermédiaire 18, appelée plateforme, qui s'étend à peu près perpendiculairement à l'axe EV et qui raccorde le pied 11 à la pale 12.

La structure métallique 20 est une pièce monobloc, qui comprend une cavité interne servant, en fonctionnement, à refroidir l'aube en véhiculant de l'air frais au travers de cette aube. Cette cavité interne s'étend, par exemple, depuis une embouchure formée à la base du pied (et donc non visible sur la figure 1) jusqu'aux trous 19, dits « trous de dépoussiérage », que comporte une paroi 22 située au sommet de l'aube. Cette paroi forme le fond d'une cavité ouverte communément appelée « baignoire ».

Si l'aube est réalisée par fonderie à cire perdue, alors la baignoire et la cavité interne de l'aube sont, par exemple, obtenues par l'utilisation d'un noyau céramique en deux parties : une première partie formant le négatif de la baignoire et une deuxième partie formant le négatif de la cavité interne de l'aube, ces deux parties étant reliées par des ponts céramiques formant le négatif des trous 19, tandis que la structure métallique 20 de l'aube est obtenue par coulée d'un métal ou d'un alliage métallique en fusion entre le noyau céramique et un moule-carapace en un matériau réfractaire, typiquement une céramique, après décirage et frittage de ce moule.

Après solidification du métal ou de l'alliage, le moule-carapace est décoché.

On obtient ainsi l'aube illustrée sur la figure 2, vue de dessus au niveau de la pale 12.

Comme visible sur cette figure, la surface externe de la structure métallique 20 de l'aube 10 a été laissée à nu par la destruction - ou décochage - du moule-carapace mais le noyau céramique - dont on voit la partie, référencée 21, formant le négatif de la baignoire - est encore présent.

Si la surface externe de la structure métallique 20 de l'aube est soumise à un décapage chimique par immersion de cette aube dans un bain acide fortement concentré, les première et deuxième parties du noyau céramique se gorgent d'acide par capillarité puisque ce noyau présente une structure poreuse, et retiennent l'acide aussi longtemps que le noyau céramique n'est pas décoché à son tour.

Il en résulte, qu'après décochage du noyau céramique, des manques de matière peuvent être observés au niveau de la surface interne de la structure métallique 20, notamment au niveau de la surface interne de la paroi 22.

Pour prévenir l'apparition de ces manques de matière, il est donc proposé selon l'invention de remplir les pores du noyau céramique d'un liquide, par exemple par immersion de l'aube dans ce liquide, et ce, de préférence jusqu'à saturation de ces pores en liquide, avant de procéder au décapage chimique.

Le liquide est de préférence de l'eau.

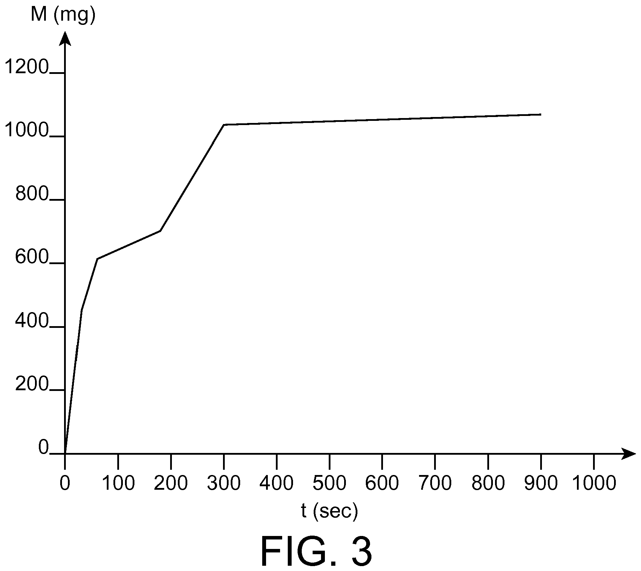

Comme illustré par la figure 3, qui représente l'évolution de la masse d'eau, notée M et exprimée en mg, absorbée par le noyau céramique poreux d'une aube telle que montrée sur la figure 2 en fonction du temps d'immersion, noté t et exprimé en secondes, de cette aube dans de l'eau, un temps d'immersion de 5 minutes suffit à obtenir une quasi saturation du noyau céramique en eau.

## Revendications

1. Procédé de décapage chimique d'une pièce métallique de fonderie, comprenant une enveloppe métallique qui délimite un espace interne dans lequel est logé au moins un noyau céramique poreux, et un espace externe, le noyau céramique étant en communication fluidique avec l'espace externe, lequel procédé comprend :
- un remplissage des pores du noyau céramique avec un liquide ; puis
- le décapage chimique de la pièce métallique de fonderie.

2. Procédé selon la revendication 1, dans lequel le remplissage des pores comprend une immersion de la pièce métallique dans le liquide.

3. Procédé selon la revendication 1 ou la revendication 2, dans lequel les pores sont remplis d'une masse de liquide représentant au moins 90 % de la masse de liquide que contiendraient ces pores s'ils étaient saturés en liquide.

4. Procédé selon la revendication 3, dans lequel les pores sont remplis d'une masse de liquide représentant au moins 95 % et, de préférence 100 %, de la masse de liquide que contiendraient ces pores s'ils étaient saturés en liquide.

5. Procédé selon l'une quelconque des revendications 1 à 4, dans lequel le liquide est une solution aqueuse, de préférence de l'eau.

6. Procédé selon l'une quelconque des revendications 1 à 5, dans lequel le décapage chimique est un décapage acide.

7. Procédé selon la revendication 6, dans lequel le décapage acide comprend une immersion de la pièce métallique dans un bain comprenant de l'acide chlorhydrique.

8. Procédé selon l'une quelconque des revendications 1 à 7, dans lequel la pièce métallique de fonderie est une aube de turbine pour turbomachine, de préférence pour turboréacteur d'aéronef.

9. Procédé de fabrication d'une pièce métallique par fonderie à cire perdue, comprenant :
- la fourniture d'une pièce métallique de fonderie, comprenant une enveloppe métallique qui délimite un espace interne dans lequel est logé au moins un noyau céramique poreux, et un espace externe, le noyau céramique poreux étant en communication fluidique avec l'espace externe ; et
- un décapage chimique de la pièce métallique de fonderie par la mise en oeuvre d'un procédé selon l'une quelconque des revendications 1 à 8.

10. Procédé selon la revendication 9, dans lequel la pièce métallique est une aube de turbine pour turbomachine, de préférence pour turboréacteur d'aéronef.

## Patentansprüche

1. Verfahren zum chemischen Beizen eines Metallgussteils, eine Metallhülle umfassend, die einen Innenraum begrenzt, in dem mindestens ein poröser Keramikkern untergebracht ist, und einen Außenraum, wobei der Keramikkern in fluidischer Verbindung mit dem Außenraum steht, wobei das Verfahren umfasst:
- ein Füllen der Poren des Keramikkerns mit einer Flüssigkeit; danach
- das chemische Beizen des Metallgussteils.

2. Verfahren nach Anspruch 1, wobei das Füllen der Poren ein Eintauchen des Metallteils in die Flüssigkeit umfasst.

3. Verfahren nach Anspruch 1 oder Anspruch 2, wobei die Poren mit einer Masse von Flüssigkeit gefüllt sind, die mindestens 90 % der Masse von Flüssigkeit beträgt, die diese Poren enthalten würden, wenn sie mit Flüssigkeit gesättigt wären.

4. Verfahren nach Anspruch 3, wobei die Poren mit einer Masse von Flüssigkeit gefüllt sind, die mindestens 95% und vorzugsweise 100 % der Masse von Flüssigkeit beträgt, die diese Poren enthalten würden, wenn sie mit Flüssigkeit gesättigt wären.

5. Verfahren nach einem der Ansprüche 1 bis 4, wobei die Flüssigkeit eine wässrige Lösung ist, vorzugsweise Wasser.

6. Verfahren nach einem der Ansprüche 1 bis 5, wobei das chemische Beizen ein saures Beizen ist.

7. Verfahren nach Anspruch 6, wobei das saure Beizen ein Eintauchen des Metallteils in ein Bad umfasst, das Salzsäure umfasst.

8. Verfahren nach einem der Ansprüche 1 bis 7, wobei das Metallgussteil eine Turbinenschaufel für eine Turbomaschine ist, vorzugsweise für eine Strahlturbine eines Luftfahrzeugs.

9. Verfahren zur Herstellung eines Metallteils durch Wachsausschmelzverfahren, umfassend:
- das Bereitstellen eines Metallgussteils, eine Metallhülle umfassend, die einen Innenraum begrenzt, in dem mindestens ein poröser Keramikkern untergebracht ist, und einen Außenraum, wobei der poröse Keramikkern in fluidischer Verbindung mit dem Außenraum steht; und
- ein chemisches Beizen des Metallgussteils durch Durchführen eines Verfahrens nach einem der Ansprüche 1 bis 8.

10. Verfahren nach Anspruch 9, wobei das Metallteil eine Turbinenschaufel für eine Turbomaschine ist, vorzugsweise für eine Strahlturbine eines Luftfahrzeugs.

## Claims

1. Method for chemically pickling a cast metal part, comprising a metal envelope which defines an inner space in which at least one porous ceramic core is housed, and an outer space, the ceramic core being in fluid communication with the outer space, which method comprises:
- filling the pores of the ceramic core with a liquid; then
- chemically pickling the cast metal part.

2. Method according to claim 1, wherein filling the pores comprises immersing the metal part in the liquid.

3. Method according to claim 1 or claim 2, wherein the pores are filled with a mass of liquid representing at least 90% of the mass of liquid that these pores would contain if they were saturated with liquid.

4. Method according to claim 3, wherein the pores are filled with a mass of liquid representing at least 95%, and preferably 100%, of the mass of liquid that these pores would contain if they were saturated with liquid.

5. Method according to any one of claims 1 to 4, wherein the liquid is an aqueous solution, preferably water.

6. Method according to any one of claims 1 to 5, wherein the chemical pickling is an acid pickling.

7. Method according to claim 6, wherein the acid pickling comprises immersing the metal part in a bath comprising hydrochloric acid.

8. Method according to any one of claims 1 to 7, wherein the cast metal part is a turbine blade for a turbomachine, preferably for an aircraft turbojet engine.

9. Method for manufacturing a metal part by investment casting, comprising:
- providing a cast metal part, comprising a metal envelope which delimits an inner space in which at least one porous ceramic core is housed, and an outer space, the porous ceramic core being in fluid communication with the outer space; and
- chemically pickling the cast metal part by implementing a method according to any of claims 1 to 8.

10. Method according to claim 9, wherein the metal part is a turbine blade for a turbomachine, preferably for an aircraft turbojet engine.
